# EUROPEAN PATENT SPECIFICATION

(11) **EP 3 746 880 B1**
(45) Date of publication and mention of the grant of the patent: **03.07.2024**
(21) Application number: 19701638.9
(22) Date of filing: 23.01.2019
(51) Int. Cl.: G06F 8/60, H04W 4/40

(54) **METHOD FOR DISTRIBUTING A SOFTWARE TO A PLURALITY OF MOTOR VEHICLES, CORRESPONDING SYSTEM, MOTOR VEHICLE, AND DATA STORAGE MEDIUM**
VERFAHREN ZUR VERTEILUNG EINER SOFTWARE AN MEHRERE KRAFTFAHRZEUGE, ENTSPRECHENDES SYSTEM, KRAFTFAHRZEUG UND DATENSPEICHERMEDIUM
PROCÉDÉ DE DISTRIBUTION D'UN LOGICIEL À UNE PLURALITÉ DE VÉHICULES AUTOMOBILES, SYSTÈME CORRESPONDANT, VÉHICULE AUTOMOBILE ET SUPPORT DE STOCKAGE DE DONNÉES

(30) Priority: 30.01.2018 DE 102018201418
(43) Date of publication of application: 09.12.2020
(73) Proprietor: VOLKSWAGEN AKTIENGESELLSCHAFT, 38440 Wolfsburg (DE)
(72) Inventor: SCHIEMENZ, Richard Ludwig, 38550 Isenbüttel (DE)
(86) International application number: PCT/EP2019/051667
(87) International publication number: WO 2019/149599

(56) References cited:
- EP-A1- 2 923 480
- EP-B1- 2 923 480
- WO-A2-2016/144764
- US-A1- 2009 248 793
- US-A1- 2009 305 778
- YI CAO ET AL: "SDN enabled content distribution in vehicular networks", FOURTH EDITION OF THE INTERNATIONAL CONFERENCE ON THE INNOVATIVE COMPUTING TECHNOLOGY (INTECH 2014), IEEE, 13 August 2014 (2014-08-13), pages 164-169, XP032663981, DOI: 10.1109/INTECH.2014.6927762 [retrieved on 2014-10-16]

## Description

The invention relates to a method for distributing a software to a plurality of motor vehicles. The invention further relates to a corresponding system and data storage medium.

In today's motor vehicles software components which control various functions of the motor vehicle and its subsystems are becoming increasingly important. These software components are, however, also becoming increasingly complex. Together with their nature of, at least in principle, being more flexible and adaptable as compared to hardware components of the motor vehicle this means that a need arises for modifying or updating these software components even after initial development is completed and the motor vehicle has already been sold and/or is already being used in the field.

A traditional approach could lie in manually updating each motor vehicle individually, for example when it is being serviced or repaired. It is also becoming increasingly common for motor vehicles to be equipped with a communications device including a wireless interface. Another conventional approach could therefore lie in providing a server and distributing the software to all vehicles over the air, i.e. using a wireless data connection. Both of these approaches do, however, pose significant disadvantages and problems. The first approach can take an undesirably long time to execute and is not guaranteed to reach all target vehicles. The second approach requires a server and data distribution infrastructure capable of handling large amounts of data as well as the large number of simultaneous connections and processes. Once the respective software is successfully distributed, however, these capabilities and capacities of the server and the data delivery infrastructure become idle and unused until the next software or update is to be distributed. The required capability of being able to handle peak demand means that the necessary server and data delivery infrastructure are unfeasibly extensive, complex, and costly in light of the increasing size of fleets of active motor vehicles. This exacerbates the inefficiency of only using the server and data delivery infrastructure on occasions when a software needs to be distributed.

US 2017 / 0 195 459 A1 discloses systems and methods for remote software update and distribution in a network of moving things. Therein, the moving things can, for example, be vehicles or any other node devices. These node devices may send a request for updated software to a server system, which may then respond with a corresponding message, depending on whether the software update is available for the particular requesting node device or not. The distributed software updates can be incremental from one version or sub--version to the next or they can be cumulative, meaning that they can update an existing software to a version several version numbers higher at once.

US 2017 / 0 032 589 A1 discloses a distributed vehicular data management system. Therein, each of a plurality of vehicles may comprise a plurality of sensors for obtaining data, as well as a communication device configured to receive a data query from a remote server. The vehicle processes the query and selects and transmits data or meta-data appropriate to respond to the query. For example, an aggregate or average or calculated value from a larger data set that remains stored on the vehicle may be sent to the remote server. Examples include a maximum temperature of a coolant or a total distance travelled as calculated from a stream of GPS position data recorded by the vehicle.

Methods relating to the distribution of software are disclosed in US 2009 / 248793 A1, EP 2 923 480 A1, as well as US 2009 / 305778 A1.

It is an objective of the present invention to enable an effective and efficient distribution of a software to a plurality of motor vehicles.

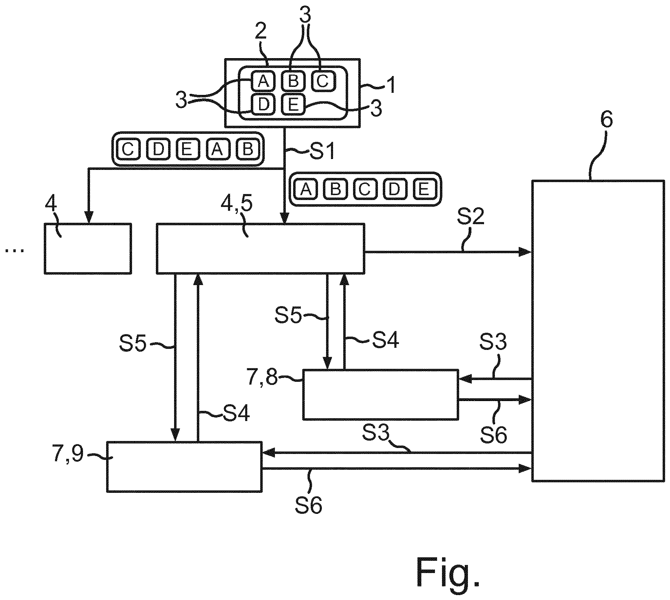

This objective is achieved by the objects of the independent claims. Advantageous embodiments with expedient developments of the present invention are indicated in the other claims as well as in the following description and the drawing.

A method according to the present invention is concerned with distributing a software to a plurality of motor vehicles. The software in this sense can, for example, be or comprise a software update for a control unit (ECU) or entertainment system of the respective motor vehicle. In addition or alternatively, the software may also implement new functionality and/or provide new, updated, or corrected data and/or media files. As part of the method, the software is provided on a network connected data server and divided into multiple different parts. This means that the software, i.e. each update, package, or data collection to be distributed is split into multiple parts, wherein, depending on redundancy with in the different parts, some, a majority, or all of the different parts of the software are needed in order to execute or apply the respective software in each motor vehicle. In another process step of the method the parts of the software are delivered to at least one first generation motor vehicle of the plurality of motor vehicles. For each part fully received by one of the plurality of motor vehicles the respective motor vehicle then transmits an acknowledgement of receipt to a coordination server.

After receiving each acknowledgement of receipt, the coordination server then transmits a corresponding notification of availability to at least one second generation motor vehicle of the plurality of motor vehicles which has not yet received the respective part. The notification of availability informs the respective motor vehicle that the respective part mentioned or referenced therein is available from the respective motor vehicle that previously sent the respective acknowledgement of receipt. The notification of availability also includes a network address of that specific motor vehicle from which the respective part is available. A network address in this sense is to be interpreted broadly as information or data uniquely identifying a motor vehicle and allowing or enabling the motor vehicle in possession of this information or data to initiate or establish a data connection with the uniquely identified motor vehicle or at least to send a corresponding request specifically to that individual motor vehicle. Depending on a type of technology or connection used, the network address may be or comprise for example an IP address, a phone number, a user or device name, or the like.

In another process step of the method upon receiving the notification of availability, the respective second generation motor vehicle then downloads the respective part from the motor vehicle specified in the notification. The respective second generation motor vehicle then also transmits a corresponding acknowledging of receipt to the coordination server once it has fully downloaded the respective part.

The above-described steps of the coordination server sending out a respective notification of availability regarding the availability of a specific part and a specific address of an n-th generation motor vehicle to an n+1th generation motor vehicle, the n+1th generation motor vehicle downloading the respective part from the specified n-th generation motor vehicle and transmitting a corresponding acknowledgement of receipt to the coordination server are iteratively repeated with correspondingly increasing generational designations until all of the plurality of motor vehicles have received and acknowledged all parts of the software. The generational designations in terms of the present invention do, in other words, relate to or indicate the number of times a specific part has been transmitted from one motor vehicle to another one which did not already have the respective part. In this sense, the generational designations of a specific motor vehicle may correspond or be tied or relative to a specific part of the software. It can, in other words, be possible for a specific vehicle to be an n-th generation motor vehicle respect to one of the parts and an n+1th - or any other number - generation motor vehicle with respect to another part.

Transmitting, delivering, or downloading a part in terms of the present invention means that a copy of the part is transmitted, delivered, or downloaded. Each of the motor vehicles does, in other words, save and store all different parts received or downloaded independently of transmitting or distributing them to one or more of the plurality of motor vehicles.

Using the described method, a load of distributing the software to all of the plurality of motor vehicles can be spread across the data server and the motor vehicles, thereby reducing a strain and necessary capability or capacity of the data server as well as each individual motor vehicle. Since after receiving a specific part of the software each motor vehicle becomes itself a provider or server of or for that specific part, the software spreads exponentially throughout the plurality of motor vehicles. A number of motor vehicles that have received or downloaded a specific part does or can, in other words, increase exponentially with each generation of transferring or download the part. This means that even with a reduced data distribution capacity of the data server, the software can be distributed to an essentially arbitrarily large number of motor vehicles in a relatively short amount of time, in particular to the above-mentioned method of updating each motor vehicle manually through connecting a wired updating-tool. At the same time, it is a particular advantage of the present invention that the distribution can be managed, controlled, and optimised by the coordination server. Since the respective acknowledgement of receipt and the notifications of availability do not themselves contain any of the data of the actual software to be distributed, they can advantageously be relatively small in terms of data size or volume. Therefore, the coordination server only needs to be capable of handling relatively small amounts of data and can thus be realised relatively easily and cheaply.

The coordination server can, for example, manage a database, wherein each of the plurality of motor vehicles and the parts of the software it has already received can be indicated. The coordination server or the database can also manage or comprise additional data or parameters. By using the coordination server as a central management or control device for the distribution of the software, the distribution of the software can be optimised, for example, in terms of speed, degree of capacity utilisation, workload distribution, et cetera.

It is to be noted, that splitting or dividing the software into multiple parts in the sense of the present invention is explicitly not the same as providing an incremental software update. Whereas in the latter case, each part can be executed or applied on its own to, for example, increase or increment a version number of an installed software, in the former case each motor vehicle needs to receive, gather, or accumulate some, most, or all of the different parts in order to apply or execute the single software at all.

Transmission of the parts from the data is to the first generation motor vehicle or motor vehicles as well as the transmission of the parts between two motor vehicles can utilise one or more of multiple different technologies and/or connection types. These can, for example, include an Internet connection, a direct or ad-hoc connection, a wireless connection (WLAN), a radio or cellular or mobile connection, a Bluetooth-connection, a vehicle-to-vehicle connection (V2V) also known as a vehicular ad-hoc network (VANET) or a mobile ad-hoc network (MANET), dedicated short range communication (DSRC), and/or others.

In an advantageous development of the present invention the coordination server selects and specifies the network address based on physical proximity of the involved motor vehicles. For downloading the respective part of the software from the specified motor vehicle, the respective downloading motor vehicle establishes a vehicle-to-vehicle connection to that motor vehicle from which the respective part is available. The respective part of the software can, in other words, be distributed locally, i.e. to a target motor vehicle located in a vicinity or surroundings, specifically within a direct communication range of the respective transmitting motor vehicle. This approach can advantageously forego the use of a mobile or cellular network or the Internet for that particular transfer, thereby advantageously reducing strain or degree of utilisation of these networks. If no suitable motor vehicle is available in that range, a conventional internet connection can be used as a fall-back.

In an advantageous development of the present invention it is provided that for the initial delivery of the parts from the data server the parts are delivered to a number of first generation motor vehicles equal to or greater than a number of different parts into which the software has been split or divided. In other words, at least as many first generation motor vehicles are automatically selected for the initial delivery of the parts by or from the data server as there are different parts of the software. Nevertheless, even in this case the first generation motor vehicles are only a subset of the plurality of motor vehicles to which the software is to be distributed. Selecting or specifying the minimum number of first generation motor vehicles depending on the number of different parts of the software in this manner can advantageously provide an optimum compromise or trade-off between speed of distribution on the one hand and cost and capacity of the data server on the other hand.

According to the present invention the parts are delivered from the data server to the different first generation motor vehicles in different orders, so that for each part there is at least one different first generation motor vehicle that receives this particular part as the first of all different parts. The parts are, in other words, distributed to different of the first generation motor vehicles in different sequences. This means that all different parts, i.e. the whole or complete software, is made available at least somewhere in the plurality of motor vehicle as fast and as soon as possible. Since each of the different parts is then available from at least one different first generation motor vehicle, each part can spread or cascade exponentially throughout the plurality of motor vehicles at the same time. This can advantageously prevent a situation where many motor vehicles already have received, for example, all but one part and then have to wait for that specific part to be distributed throughout the plurality or fleet of motor vehicles because it was initially delivered as the last of all different parts from the data server to the first generation motor vehicles.

In an advantageous development of the present invention metadata about the complete software is included with each part, wherein the metadata at least specifies the number of different parts into which the software has been divided. This means that after receiving one or more different parts each motor vehicle has the necessary information to determine which and how many different parts are still needed until it has received the complete software. This approach can therefore advantageously prevent unsuccessful execution attempts which fail because at least one of the different parts is still missing. The metadata can, for example, also include a size of each different part. This can advantageously allow for an optimisation of the speed of distribution of the software by selecting the next part to be downloaded for each motor vehicle depending on the size of the different parts and, for example, and available speed or bandwidth of a respective data connection or network connection.

In a further advantageous development of the present invention the software is automatically applied by each motor vehicle to itself or a corresponding one of its systems or functional units when it has received all different parts. For this purpose, the different parts and/or the complete software can, for example, indicate to a control unit or data processing device of the motor vehicle for which internal system, control unit, device, or functional unit of the motor vehicle the software is intended. Automatic execution or application of the software advantageously ensures that the software is applied to each motor vehicle as soon as possible. This in particular avoids a need for a separate execution or application signal to be sent to a motor vehicle and/or a manual execution or application of the fully downloaded or received software.

In an advantageous development of the present invention each motor vehicle automatically transmits a completion signal to the coordination server when the respective motor vehicle has received all different parts of the software. Each motor vehicle can, in other words, provide an independent confirmation that it actually has received the complete software. Even though the coordination server can derive this fact by analysing all of the received acknowledgements of receipt, this approach can advantageously improve a confidence in or reliability of the corresponding data or analysis result of the coordination server. It can be particularly advantageous for the motor vehicle to analyse the received parts with respect to completeness and/or transmission errors prior to sending the completion signal. This can, for example, be done by automatically calculating a checksum or hash-value for the received parts and comparing it to a corresponding reference value. This reference value can, for example, be included in each of the parts to provide redundancy as a failsafe measure against transmission errors. This approach can advantageously provide the coordination server with the information that the parts have not only been received by the motor vehicle but have been verified, that is, have been received uncorrupted or without transmission errors.

According to the present invention the coordination server transmits a deletion signal to all of the plurality of motor vehicles when all of them have each received all different parts. The deletion signal includes an instruction for deleting the received parts after the software has been applied. While it is advantageous for each motor vehicle to store the parts of the software unmodified for distribution to any other of the plurality of motor vehicles during the distribution process, the received and stored parts are no longer needed or necessary after each of the plurality of motor vehicles has received all parts, i.e. the complete software. The deletion signal therefore advantageously ensures that a storage space or storage capacity of each motor vehicle is freed up again after the distribution of the software throughout the fleet or plurality of motor vehicles is completed. This approach advantageously enables the presently described distribution method to be used repeatedly to distribute different software even though each motor vehicle may only be equipped with enough storage space or storage capacity for storing one software at a time. At the same time, it is ensured that the software is not deleted before it has been executed, i.e. applied to the respective motor vehicle.

In an advantageous development of the present invention a respective quality of a network connection of multiple of the motor vehicles is automatically determined. From these multiple motor vehicles the one or ones to which the notifications of availability are sent are then automatically selected based on the determined quality. The quality of their respective network connection can be determined by the data server and/by or each motor vehicle. Respective quality data specifying or characterising the determined quality can then be transmitted to and aggregated at the coordination server. Additionally or alternatively it is also possible that the quality of the network connections is determined by the coordination server itself, for example by querying each of the multiple motor vehicles. The quality of a network connection can, for example, characterise its speed, bandwidth, reliability, stability, and/or other parameters. By taking into account the quality of the network connections it advantageously becomes possible for the coordination server to optimise a distribution of the software throughout the fleet or plurality of motor vehicles even further, for example in terms of speed and/or network utilisation. For example, the notifications of availability can preferentially be transmitted to motor vehicles currently having access to the highest quality network connections. Additionally or alternatively only the motor vehicles having access to the highest quality network connections can be specified as data sources. This can advantageously ensure that each transfer or transmission of a part can be completed as fast and as reliable as possible, which in turn decreases an overall amount of time required for distributing the software to all of the plurality of motor vehicles. It can also be possible to pair motor vehicles for transmitting a part from one to the other by matching their respective upload and download speeds to ensure optimum or maximum bandwidth or network utilisation.

Advantageously, the quality of the respective network connection can be determined regularly or continuously. This can advantageously enable the coordination server to initiate a transfer of a part to a respective motor vehicle as soon as and/or only when the quality of its respective network connection meets a predetermined threshold value. If, for example, a motor vehicle having a high quality network connection is ready and available to transmit a part, the coordination server can select one of multiple other motor vehicles which have not yet received that specific part in dependence on the qualities of their respective network connections.

In an advantageous development of the present invention the quality of the respective network connection for each transfer of one of the parts is monitored and reported to and/or aggregated by the coordination server. If a predetermined quality criterion is met, the respective motor vehicle transmitting the respective part is then classified or categorised as a preferred data source or data provider. Motor vehicles classified as a preferred data source are then preferentially indicated or specified in the notifications of availability by the coordination server depending on their availability. If, for example, a specific part has already been distributed or transmitted to so many of the plurality of motor vehicles that more providers or sources for that particular part are available then the number of motor vehicles still needing to download that particular part, the coordination server can preferentially specify a network address of a preferred data source. By thus selecting motor vehicles with relatively high quality data connections as providers or sources for the specific part the distribution of the software can be further optimised, for example in terms of speed and/or network for bandwidth utilisation.

To ensure that the distribution does continue, the coordination server can check if a specific motor vehicle is available, that is, if the specific motor vehicle is reachable via its network connection prior to specifying its network address in a modification of availability. The coordination server can, in other words, select and specify a motor vehicle as a provider or data source from a pool of reachable or available motor vehicles. The quality criterion and/or threshold value may therefore also be defined in relative terms. This means that, for example, a certain number or percentage that have the highest quality network connections of all available or reachable motor vehicles may be classified or designated as preferred data sources.

In an advantageous development of the present invention it is provided that after all parts have been delivered from the data server to each set of first generation motor vehicles, a new set of first generation motor vehicles is automatically chosen from the plurality of motor vehicles. To this newly chosen set of first generation motor vehicles the parts are then also delivered by the data server. The data server can, in other words, keep delivering the part of the software to new or additional motor vehicles even after the initial delivery to the first set of first generation motor vehicles, i.e. the at least one first generation motor vehicles, has been completed. The data server can, for example, be configured to deliver the parts or the software to a specified number of motor vehicles at a time.

A set of first generation motor vehicles in this sense can consist of one or more motor vehicles. This means that it is also possible to add or select a new first generation motor vehicle to which the parts are going to be delivered by the data server each time one previously chosen or selected first generation motor vehicle has received all different parts from the data server. This approach can advantageously limit a peak load of the data server while at the same time advantageously increasing the overall speed of distribution of the software to all of the plurality of motor vehicles by actively creating additional data sources or providers in the form of additional first generation motor vehicles. It can be preferable for the data server to choose or select as a new or additional first generation motor vehicle one that has not yet received any part. In particular if no more such motor vehicles are available, i.e. if all of the plurality of motor vehicles have received at least one part, the data server can also deliver one or more of the respective remaining parts to motor vehicles which have already received at least one part. In this case, the respective motor vehicle still becomes a first generation motor vehicle with respect to each part of the software that it receives directly from the data server. This approach advantageously ensures that the software eventually gets distributed to all of the plurality of motor vehicles, even in the unlikely case in which all other motor vehicles that have already received a certain part and could therefore potentially act as a provider or data source for at least that part, become unavailable.

Another aspect is a motor vehicle comprising a communication device for wirelessly communicating with a data server, for wirelessly communicating with a coordination server, and for wirelessly communicating with other motor vehicles. The motor vehicle further comprises a data storage device connected to the communication device for storing parts of a software received from the data server and/or from the other motor vehicles. The motor vehicle, in particular the communication and storage devices, are configured to receive the parts of the software and store them internally on the data storage device. They are further configured to transmit a respective acknowledgement of receipt for each received and stored part to the coordination server. They are further configured upon receiving a download request for one of the received and stored parts from another motor vehicle to upload the requested part to the respective motor vehicle. They are further configured to upon receiving a notification of availability specifying one of the other motor vehicles as a source for a part of the software, which isn't stored on the data storage device, download the specified part from the specified other motor vehicle and to transmit a corresponding acknowledgement of receipt to the coordination server.

Another aspect of the present invention is a system for initiating and coordinating a distribution of a software to a plurality of motor vehicles. The system comprises at least a network connected data server and a network connected coordination server. The data server comprises a data store containing multiple parts into which the software has been split or divided. The data server is configured to deliver the parts of the software to at least one first generation motor vehicle. The coordination server is configured to upon receiving an acknowledgement of receipt from a respective one of the motor vehicles regarding at least one of the parts transmit a corresponding notification of availability to another one of the plurality of motor vehicles that has not yet received the respective part. Therein, the notification of availability specifies the respective part and a network address of the motor vehicle from which the acknowledgement of receipt was received.

The motor vehicles, the data server, the coordination server, and the respective actions or processes they are configured to execute or take part in as mentioned with respect to or in context or conjunction with the motor vehicle and/or the system according to the present invention can specifically be or refer to the same respective entities, actions, or processes discussed with respect to or in conjunction with the method according to the present invention.

The motor vehicle as well as the system according to the present invention can explicitly be configured to execute or take part in the method according to the present invention. In particular, the motor vehicle can be configured to execute or take part in the method according to the present invention in conjunction with or in interaction with the system according to the present invention and vice versa.

In an advantageous development of the system according to the present invention the system comprises a data management server that integrates the data server and the coordination server. The data management server, in other words, combines the data server and the coordination server. This can advantageously reduce a number of required hardware components, since at least some hardware components and/or parts of the corresponding data delivery infrastructure can be shared between the data server and the coordination server.

The system according to the present invention can also comprise the communication devices and/or data storage devices of, that is, aboard, the plurality of motor vehicles as described with respect to the motor vehicle according to the present invention.

Another aspect of the present invention is a data storage medium for a motor vehicle and/or for a system in accordance with the present invention, wherein the data storage medium contains program code that implements or represents the steps of at least one embodiment of the method according to the present invention, at least as far as they pertains to the respective motor vehicle or system, respectively.

Correspondingly, the motor vehicle and/or the system according to the present invention may comprise a data storage medium according to the present invention.

The motor vehicle and/or the system according to the present invention may respectively also comprise a data processing unit (CPU) connected to one or more of the other respective components or devices. In particular, the processing unit, which can comprise one or more microchips or microprocessors, can be configured to execute at least part of the program code stored on the respective data storage medium.

The embodiments and developments of the present invention described herein for at least one aspect of the present invention, that is, for the method, the motor vehicle, the system, and the storage medium, as well as the corresponding advantages may be applied to any and all aspects of the present invention.

Further advantages, features, and details of the present invention derive from the following description of preferred embodiments of the present invention as well as from the drawing pertaining to the present invention. The features and feature combinations previously mentioned in the description as well as the features and feature combinations mentioned in the following description of the figure and/or shown in the figure alone can be employed not only in the respectively indicated combination but also in other combinations or taken alone without leaving the scope of the present invention.

Below, an embodiment of the invention is described. With respect thereto, the only figure shows a schematic overview illustrating a method for distributing a software to a plurality of motor vehicles.

The exemplary embodiment described below is a preferred embodiment of the present invention. Therein, the described components and process steps constitute individual features of the present invention that can even individually and independently from one another as well as in combination not explicitly shown or described further develop the present invention. Furthermore, the described embodiment can be further developed or supplemented by other features, components, and/or steps already described above.

The only figure shows a schematic overview illustrating different components or entities and process steps of a method for distributing a software to a plurality of motor vehicles.

Today, motor vehicles typically comprise multiple networked control units and devices, each of which comprises a software component, such as for example a firmware, a runtime environment, and/or one or more applications and/or user interfaces. The first or initial version of these software components is typically provided or installed when the respective motor vehicle is produced. Over the course of a lifetime of the motor vehicle it can, however, be desirable for different reasons to update these software components. Possible reasons or motivations for this can include applying further optimisations or implementing or unlocking new features or functions, in particular for a motor control unit or a control unit of a multimedia- or infotainment-system of the motor vehicle. These types of updates are typically provided by a producer or manufacturer of the motor vehicle for the respective subsystem or device. Other examples can include user initiated software updates, such as for example updating street- or navigation-data of a navigation system of the motor vehicle. In the past, software updates, that is, updates to one or more software components of the motor vehicle, have typically been applied to the respective motor vehicle by attaching an updating-tool to the motor vehicle through a wired connection, for example in a repair- or service-workshop.

To enable on-demand availability of multimedia content and services in motor vehicles, such as music streaming, an internet connection, et cetera, motor vehicles are increasingly equipped with devices and interfaces for wireless communication and data exchange, for example via a mobile or cellular network such as LTE or wireless LAN (WLAN). These wireless network connections can also be used for updating the above-mentioned software components, in particular independently of a current position or location of the respective motor vehicle.

Rolling out a software or software update to the fleet of motor vehicles, can, however demand a significant capability and capacity for processing and executing a correspondingly large number of data transmissions from a central server along with corresponding expenses and maintenance effort. If, however, a central server of such capabilities were to be implemented or realised, these capabilities and capacity would nevertheless most likely remain unused in times when no software update needs to be distributed. This creates a demand for a solution that can effectively and efficiently distribute a software update throughout a fleet of motor vehicles while requiring less capabilities and investment on the server side.

Presently, the central data server 1 is provided which is configured to serve or deliver a software 2. The software 2 is divided into multiple parts 3, which can be stored on a data store of the data server 1.

In a first process step S1 the software 2, that is, the parts 3, are delivered by or from the data server 1 to multiple first generation motor vehicles 4. These multiple first generation motor vehicles form a subset of the fleet or plurality of motor vehicles to which the software 2 is to be distributed. The delivery or transmission of the parts 3 to the first generation motor vehicles 4 can be managed or executed in dependence on an availability and/or quality of a respective network connection between the data server 1 and each of the first generation motor vehicles 4.

By splitting or dividing the software 2 into multiple parts 3 it can advantageously be achieved that even in case of a temporarily interrupted network connection only a respective currently transmitted one of the multiple parts 3 instead of the complete software 2 has to be transmitted again after the interrupted network connection has been re-established. Each of the first generation motor vehicles 4 stores each of the different parts 3 received from the data server 1 on a respective internal data storage device.

Presently, the software 2 has been divided into five different parts 3, which are symbolically indicated as A, B, C, D, and E. Different ones of the first generation motor vehicles 4 receive the parts 3 in different orders or sequences. For example, the fleet or plurality of motor vehicles to which the software 2 is to be distributed may comprise or consist of 100,000 vehicles. To limit a peak workload for the data server 1, for example, 1000 first generation motor vehicles 4 may be selected to initially receive the software 2 from the data server 1. Since in the present example the software 2 has been divided into five different parts 3, five different sequences of the parts 3 are each delivered to 20% of these selected 1000 first generation motor vehicles 4. The five different sequences of the parts 3 may be automatically generated by means of a repeated cyclical permutation of all parts to ensure that at each time all different parts 3 are delivered to the first generation motor vehicles 4 in equal numbers. For example, using the above-mentioned symbolical designations, the five different sequences may be A, B, C, D, E and B, C, D, E, A and C, D, E, A, B and D, E, A, B, C and E, A, B, C, D. This also ensures that after the first batch of partial deliveries from the data server 1 the complete software 2, i.e. each of the different parts 3, is already available in the fleet of motor vehicles for further distribution.

For the following steps of the method one of the first generation motor vehicles 4, namely a first car 5, is considered more closely as an example. After receiving each different part 3, the first car 5 transmits a corresponding acknowledgement of receipt to a coordination server 6 in a process step S2. The coordination server 6 is a central network connected server and data processing unit which coordinates the distribution of the software 2 throughout the fleet of motor vehicles.

In a process step S3 for each acknowledgement of receipt received from the first car 5 - or any other of the first generation motor vehicles 4 - the coordination server 6 transmits a respective notification of availability to at least one second generation motor vehicle 7 that has not yet received the respective part 3. This notification of availability includes not only a designation of the respective part 3 but also a network address or an identifier of, for example, the first car 5 from which the respective part 3 is available.

Presently, the notification of availability has been transmitted from the coordination server 6 to a second car 8. In a process step S4 this second car 8 then contacts the specified network address, in this case, the first car 5, and downloads the respective specified part 3 from the first car 5 in a process step S5. The first generation motor vehicles 4 are therefore themselves becoming providers or data sources for the parts 3 they have received from the data server 1.

Once the second car 8 has fully or completely downloaded the respective part 3 from the first car 5 the second car 8 transmits a corresponding acknowledgement of receipt to the coordination server 6 in a process step S6. The coordination server 6 is therefore at all times informed about the total distribution of each part 3 throughout the fleet of motor vehicles 4, 7.

Once the download of the respective part 3 from the first car 5 to the second car 8 is complete and has been acknowledged, the coordination server 6 can repeat process step S3 by sending out another corresponding notification of availability to another one of the second generation motor vehicles 7, such as a third car 9, again specifying the first car 5 - or any other of the motor vehicles 4, 7 that has already received the respective part 3 from the data server 1 or from another for vehicle 4, 7 - as a data source from which the respective part 3 is available for download.

If, for example based on a quality of its network connection, the first car 5 has been classified as a preferred data source, and if this network connection can handle multiple connections or uploads simultaneously, it can also be possible for the coordination server 6 to correspondingly send both or multiple notifications of availability to multiple of the second generation motor vehicles 7, such as the second car 8 and the third car 9, specifying the first car 5 as a data source each time.

Once one of the second generation motor vehicles 7 has received and acknowledged a particular part 3, it itself becomes a potential provider or data source for that particular part 3 and can therefore be referenced as such by the coordination server 6.

This means that in the present example the coordination server 6 may send out one or more notifications of availability to one or more third generation motor vehicles not shown here, which can then download the specified part 3 from the second generation motor vehicles 7 which have previously downloaded their respective part 3 from one or more of the first generation motor vehicles 4. This process can then be iteratively continued until all of the fleet or plurality of motor vehicles have received all parts 3 of the software 2. Meanwhile the lower-generation motor vehicles can, of course, also continue distributing the parts 3 they already received. This means that each motor vehicle 4, 7 can distribute the same part 3 multiple times, i.e. to multiple other motor vehicles 4, 7.

As soon as each individual motor vehicle 4, 5, 7, 8, 9 has received all five different parts 3 it can then automatically combine them to recreate the computer software 2, which can then automatically be executed or applied.

The described examples illustrate how by dividing the software 2 into multiple different parts 3, providing the data server 1 of limited capacity, providing the coordination server 6 for managing and controlling the distribution, and using car-to-car data transfers, the software 2 can be distributed effectively and efficiently throughout a plurality of targets, such as the motor vehicles 4,7.

### List of reference signs

- 1: Data server
- 2: Software
- 3: Parts (of software 2)
- 4: First generation motor vehicles
- 5: First car
- 6: Coordination server
- 7: Second generation motor vehicles
- 8: Second car
- 9: Third car
- S1-S6: Process steps

## Claims

1. Method for distributing a software update (2) to a plurality of motor vehicles (4, 5, 7, 8, 9) wherein
- the software update (2) is provided on a network connected data server (1) comprising a data store containing multiple parts (3) into which the software update has been divided,
- the data server wirelessly delivers the parts (3) to at least one first generation motor vehicle (4, 5) of the plurality of motor vehicles (4, 5, 7, 8, 9),
- for each part (3) fully received by one of the plurality of motor vehicles (4, 5, 7, 8, 9), the respective motor vehicle (4, 5, 7, 8, 9) transmits an acknowledgement of receipt to a coordination server (6),
- after receiving each acknowledgement of receipt, the coordination server (6) then transmits a corresponding notification of availability to at least one second generation motor vehicle (7, 8, 9) of the plurality of motor vehicles (4, 5, 7, 8, 9) which has not yet received the respective part (3), informing it that the respective part (3) is available from the respective motor vehicle (4, 5) that previously sent the acknowledgement of receipt, wherein the notification of availability includes a network address of that specific motor vehicle (4, 5) from which the respective part (3) is available,
- upon receiving the notification of availability, the respective second generation motor vehicle (7, 8, 9) then downloads the respective part (3) from the motor vehicle (4, 5) specified in the notification, and also transmits a corresponding acknowledgement of receipt to the coordination server (6) when it has fully downloaded the respective part (3),
- the steps of the coordination server (6) sending out a notification of availability regarding the availability of a specific part (3) at a specific address of an n-th generation motor vehicle (4, 5) to an n+1th generation motor vehicle (7, 8, 9), the n+1th generation motor vehicle (7, 8, 9) downloading the respective part (3) from the specified n-th generation motor vehicle (4, 5) and transmitting a corresponding acknowledging of receipt to the coordination server (6) are iteratively repeated with correspondingly increasing generational designations until all of the plurality of motor vehicle (4, 5, 7, 8, 9) have received and acknowledged all parts (3) of the software update (2),
- the coordination server (6) transmits a deletion signal to all of the plurality of motor vehicles (4, 5, 7, 8, 9) when all of them have each received all different parts (3), wherein the deletion signal includes an instruction for deleting the received parts (3) after the software update has been applied, and
- the parts (3) are delivered from the data server (1) to the different first generation motor vehicles (4, 5) in different orders, so that for each part (3) there is at least one different first generation motor vehicle (4, 5) that receives this particular part (3) as the first of all different parts (3).

2. Method in accordance with claim 1,
**characterised in that**
the coordination server selects and specifies the network address based on physical proximity of the involved motor vehicles (4, 5, 7, 8, 9) and for downloading the respective part (3) of the software update (2) from the specified motor vehicle (4, 5, 7, 8, 9), the respective downloading motor vehicle (7, 8, 9) establishes a vehicle-to-vehicle connection to that motor vehicle (4, 5) from which the respective part (3) is available.

3. Method in accordance with any of the preceding claims,
**characterised in that**
for the initial delivery of the parts (3) from the data server (1), the parts (3) are delivered to a number of first generation motor vehicles (4, 5) equal to or greater than the number of different parts (3) into which the software update (2) has been divided.

4. Method in accordance with any of the preceding claims,
**characterised in that**
with every part (3) metadata about the complete software update (2) is included, the metadata at least specifying the number of different parts (3) into which the software update (2) has been divided.

5. Method in accordance with any of the preceding claims,
**characterised in that**
the software update (2) is automatically applied by each motor vehicle (4, 5, 7, 8, 9) to itself when it has received all different parts (3).

6. Method in accordance with any of the preceding claims,
**characterised in that**
each motor vehicle (4, 5, 7, 8, 9) automatically transmits a completion signal to the coordination server (6) when the respective motor vehicle (4, 5, 7, 8, 9) has received all different parts (3) of the software update (2).

7. Method in accordance with any of the preceding claims,
**characterised in that**
a respective quality of a network connection of multiple of the motor vehicles (4, 5, 7, 8, 9) is automatically determined, and from these multiple motor vehicles (4, 5, 7, 8, 9) the ones to which the notifications of availability are sent are automatically selected based on the determined quality.

8. Method in accordance with any of the preceding claims,
**characterised in that**
- a quality of a respective network connection for each transfer of one of the parts (3) is monitored and reported to the coordination server (6), and
- if a predetermined quality criterion is met, the respective motor vehicle (4, 5, 7, 8, 9) transmitting the respective part (3) is classified as a preferred data source, and
- motor vehicles (4, 5, 7, 8, 9) classified as a preferred data source are preferentially indicated in the notifications of availability by the coordination server (6) depending on their availability.

9. Method in accordance with any of the preceding claims,
**characterised in that**
after all parts (3) have been delivered from the data server (1) to each set of first generation motor vehicles (4, 5), from the plurality of motor vehicles (4, 5, 7, 8, 9) a new set of first generation motor vehicles (4, 5) is automatically chosen to which the parts (3) are then also delivered by the data server (1).

10. System for initiating and coordinating a distribution of a software update (2) to a plurality of motor vehicles (4, 5, 7, 8, 9), comprising a network connected data server (1) and a network connected coordination server (6), wherein the software update (2) comprises multiple parts (3) and
- the data server (1) comprises a data store containing the parts (3) of the software update (2),
- the data server (1) is configured to wirelessly deliver the parts (3) of the software update (2) to at least one first generation motor vehicle (4, 5),
- the data server (1) is configured to deliver the parts (3) to the different first generation motor vehicles (4, 5) in different orders, so that for each part (3) there is at least one different first generation motor vehicle (4, 5) that receives this particular part (3) as the first of all different parts (3).
and wherein the coordination server (6) is configured to
- upon receiving an acknowledgement of receipt from a respective one of the motor vehicles (4, 5, 7, 8, 9) regarding at least one of the parts (3), transmit a corresponding notification of availability to another one of the plurality of motor vehicles (4, 5, 7, 8, 9) that has not yet received the respective part (3) specifying the part (3) and a network address of the motor vehicle (4, 5, 7, 8, 9) from which the acknowledgement of receipt was received, and
- to transmit a deletion signal to all of the plurality of motor vehicles (4, 5, 7, 8, 9) when all of them have each received all different parts (3), wherein the deletion signal includes an instruction for deleting the received parts (3) after the software update has been applied.

11. System in accordance with claim 10,
**characterised in that**
the system comprises a data management server that integrates the data server (1) and the coordination server (6).

12. Data storage medium for a motor vehicle (4, 5, 7, 8, 9) and/or for a system in accordance with any of the claims 10 and 11, wherein the data storage medium contains program code that implements a method in accordance with any of the claims 1 to 9, at least as far as it pertains to the respective motor vehicle (4, 5, 7, 8, 9) or system, respectively.

## Patentansprüche

1. Verfahren zum Verteilen eines Software-Updates (2) auf eine Vielzahl von Kraftfahrzeugen (4, 5, 7, 8, 9), wobei
- das Software-Update (2) auf einem netzwerkverbundenen Datenserver (1) bereitgestellt wird, umfassend einen Datenspeicher, der mehrere Teile (3), in die das Software-Update aufgeteilt wurde, enthält,
- der Datenserver die Teile (3) an mindestens ein Kraftfahrzeug (4, 5) einer ersten Generation der Vielzahl von Kraftfahrzeugen (4, 5, 7, 8, 9) drahtlos liefert,
- für jeden Teil (3), der durch eines der Vielzahl von Kraftfahrzeugen (4, 5, 7, 8, 9) vollständig empfangen wird, das jeweilige Kraftfahrzeug (4, 5, 7, 8, 9) eine Empfangsbestätigung an einen Koordinierungsserver (6) übermittelt,
- nach einem Empfangen jeder Empfangsbestätigung, der Koordinierungsserver (6) dann eine entsprechende Verfügbarkeitsbenachrichtigung an mindestens ein Kraftfahrzeug (7, 8, 9) einer zweiten Generation der Vielzahl von Kraftfahrzeugen (4, 5, 7, 8, 9), das den jeweilige Teil (3) noch nicht empfangen hat, übermittelt, wobei es informiert wird, dass der jeweilige Teil (3) von dem jeweiligen Kraftfahrzeug (4, 5), das die Empfangsbestätigung zuvor gesendet hat, verfügbar ist, wobei die Verfügbarkeitsbenachrichtigung eine Netzwerkadresse dieses spezifischen Kraftfahrzeugs (4, 5), von dem der jeweilige Teil (3) verfügbar ist, einschließt,
- bei dem Empfangen der Verfügbarkeitsbenachrichtigung, das jeweilige Kraftfahrzeug (7, 8, 9) der zweiten Generation dann den jeweiligen Teil (3) von dem Kraftfahrzeug (4, 5), das in der Benachrichtigung spezifiziert wird, herunterlädt und ebenso eine entsprechende Empfangsbestätigung an den Koordinierungsserver (6) übermittelt, wenn es den jeweiligen Teil (3) vollständig heruntergeladen hat,
- die Schritte, dass der Koordinierungsserver (6) eine Verfügbarkeitsbenachrichtigung bezüglich der Verfügbarkeit eines spezifischen Teils (3) an einer spezifischen Adresse eines Kraftfahrzeugs (4, 5) einer n-ten Generation an ein Kraftfahrzeug (7, 8, 9) einer n+1-ten Generation sendet, das Kraftfahrzeug (7, 8, 9) der n+1-ten Generation den jeweiligen Teil (3) von dem spezifizierten Kraftfahrzeug (4, 5) der n-ten Generation herunterlädt und eine entsprechende Empfangsbestätigung an den Koordinierungsserver (6) übermittelt, mit entsprechend zunehmenden Generationsbezeichnungen iterativ wiederholt werden, bis alle der Vielzahl von Kraftfahrzeugen (4, 5, 7, 8, 9) alle Teile (3) des Software-Updates (2) empfangen und bestätigt haben,
- der Koordinierungsserver (6) ein Löschsignal an alle der Vielzahl von Kraftfahrzeugen (4, 5, 7, 8, 9) übermittelt, wenn alle von ihnen je alle unterschiedlichen Teile (3) empfangen haben, wobei das Löschsignal eine Anweisung zum Löschen der empfangenen Teile (3), nachdem das Software-Update angewendet wurde, einschließt und
- die Teile (3) von dem Datenserver (1) an die unterschiedlichen Kraftfahrzeuge (4, 5) der ersten Generation in unterschiedlichen Reihenfolgen geliefert werden, sodass es für jeden Teil (3) mindestens ein unterschiedliches Kraftfahrzeug (4, 5) der ersten Generation gibt, das diesen speziellen Teil (3) als den ersten aller unterschiedlichen Teile (3) empfängt.

2. Verfahren nach Anspruch 1,
**dadurch gekennzeichnet, dass**
der Koordinierungsserver die Netzwerkadresse basierend auf einer physischen Nähe der beteiligten Kraftfahrzeuge (4, 5, 7, 8, 9) auswählt und spezifiziert und, zum Herunterladen des jeweiligen Teils (3) des Software-Updates (2) von dem spezifizierten Kraftfahrzeug (4, 5, 7, 8, 9), das jeweilige herunterladende Kraftfahrzeug (7, 8, 9) eine Fahrzeug-zu-Fahrzeug-Verbindung zu dem Kraftfahrzeug (4, 5), von dem der jeweilige Teil (3) verfügbar ist, herstellt.

3. Verfahren nach einem der vorstehenden Ansprüche,
**dadurch gekennzeichnet, dass**
für die anfängliche Lieferung der Teile (3) von dem Datenserver (1), die Teile (3) an eine Anzahl von Kraftfahrzeugen (4, 5) der ersten Generation geliefert werden, die gleich oder größer als die Anzahl von unterschiedlichen Teilen (3), in die das Software-Update (2) aufgeteilt wurde, ist.

4. Verfahren nach einem der vorstehenden Ansprüche,
**dadurch gekennzeichnet, dass**
mit jedem Teil (3) Metadaten über das komplette Software-Update (2) eingeschlossen sind, wobei die Metadaten mindestens die Anzahl von unterschiedlichen Teilen (3), in die das Software-Update (2) aufgeteilt wurde, spezifizieren.

5. Verfahren nach einem der vorstehenden Ansprüche,
**dadurch gekennzeichnet, dass**
das Software-Update (2) durch jedes Kraftfahrzeug (4, 5, 7, 8, 9) auf sich selbst automatisch angewendet wird, wenn es alle unterschiedlichen Teile (3) empfangen hat.

6. Verfahren nach einem der vorstehenden Ansprüche,
**dadurch gekennzeichnet, dass**
jedes Kraftfahrzeug (4, 5, 7, 8, 9) ein Komplettierungssignal an den Koordinierungsserver (6) automatisch übermittelt, wenn das jeweilige Kraftfahrzeug (4, 5, 7, 8, 9) alle unterschiedlichen Teile (3) des Software-Updates (2) empfangen hat.

7. Verfahren nach einem der vorstehenden Ansprüche,
**dadurch gekennzeichnet, dass**
eine jeweilige Qualität einer Netzwerkverbindung mehrerer der Kraftfahrzeuge (4, 5, 7, 8, 9) automatisch bestimmt wird, und aus diesen mehreren Kraftfahrzeugen (4, 5, 7, 8, 9) diejenigen, an die die Verfügbarkeitsbenachrichtigungen gesendet werden, basierend auf der bestimmten Qualität automatisch ausgewählt werden.

8. Verfahren nach einem der vorstehenden Ansprüche,
**dadurch gekennzeichnet, dass**
- eine Qualität einer jeweiligen Netzwerkverbindung für jede Übertragung eines der Teile (3) überwacht und an den Koordinierungsserver (6) gemeldet wird und
- falls ein zuvor bestimmtes Qualitätskriterium erfüllt ist, das jeweilige Kraftfahrzeug (4, 5, 7, 8, 9), das den jeweiligen Teil (3) übermittelt, als eine bevorzugte Datenquelle eingestuft wird und
- Kraftfahrzeuge (4, 5, 7, 8, 9), die als eine bevorzugte Datenquelle eingestuft werden, in den Verfügbarkeitsbenachrichtigungen durch den Koordinierungsserver (6) abhängig von ihrer Verfügbarkeit bevorzugt angezeigt werden.

9. Verfahren nach einem der vorstehenden Ansprüche,
**dadurch gekennzeichnet, dass**
nachdem alle Teile (3) von dem Datenserver (1) an jeden Satz von Kraftfahrzeugen (4, 5) der ersten Generation geliefert wurden, aus der Vielzahl von Kraftfahrzeugen (4, 5, 7, 8, 9) ein neuer Satz von Kraftfahrzeugen (4, 5) der ersten Generation, an den die Teile (3) dann ebenso durch den Datenserver (1) geliefert werden, automatisch ausgesucht wird.

10. System zum Initiieren und Koordinieren einer Verteilung eines Software-Updates (2) auf eine Vielzahl von Kraftfahrzeugen (4, 5, 7, 8, 9), umfassend einen netzwerkverbundenen Datenserver (1) und einen netzwerkverbundenen Koordinierungsserver (6), wobei das Software-Update (2) mehrere Teile (3) umfasst und
- der Datenserver (1) einen Datenspeicher, der die Teile (3) des Software-Updates (2) enthält, umfasst,
- der Datenserver (1) konfiguriert ist, um die Teile (3) des Software-Updates (2) an mindestens ein Kraftfahrzeug (4, 5) der ersten Generation drahtlos zu liefern,
- der Datenserver (1) konfiguriert ist, um die Teile (3) an die unterschiedlichen Kraftfahrzeuge (4, 5) der ersten Generation in unterschiedlichen Reihenfolgen zu liefern, sodass es für jeden Teil (3) mindestens ein unterschiedliches Kraftfahrzeug (4, 5) der ersten Generation gibt, das diesen speziellen Teil (3) als den ersten aller unterschiedlichen Teile (3) empfängt.
und wobei der Koordinierungsserver (6) konfiguriert zum
- bei dem Empfangen einer Empfangsbestätigung von einem jeweiligen einen der Kraftfahrzeuge (4, 5, 7, 8, 9) bezüglich mindestens eines der Teile (3), Übermitteln einer entsprechenden Verfügbarkeitsbenachrichtigung an ein anderes eines der Vielzahl von Kraftfahrzeugen (4, 5, 7, 8, 9), das den jeweiligen Teil (3) noch nicht erhalten hat, wobei der Teil (3) und eine Netzwerkadresse des Kraftfahrzeugs (4, 5, 7, 8, 9), von dem die Empfangsbestätigung empfangen wurde, spezifiziert wird und
- zum Übermitteln eines Löschsignals an alle der Vielzahl von Kraftfahrzeugen (4, 5, 7, 8, 9), wenn alle von ihnen je alle unterschiedlichen Teile (3) empfangen haben, wobei das Löschsignal eine Anweisung zum Löschen der empfangenen Teile (3), nachdem das Software-Update angewendet wurde, einschließt.

11. System nach Anspruch 10,
**dadurch gekennzeichnet, dass**
das System einen Datenverwaltungsserver, der den Datenserver (1) und den Koordinierungsserver (6) integriert, umfasst.

12. Datenspeichermedium für ein Kraftfahrzeug (4, 5, 7, 8, 9) und/oder für ein System nach einem der Ansprüche 10 und 11, wobei das Datenspeichermedium Programmcode enthält, der ein Verfahren nach einem der Ansprüche 1 bis 9, mindestens soweit es das jeweilige Kraftfahrzeug (4, 5, 7, 8, 9) beziehungsweise System betrifft, implementiert.

## Revendications

1. Procédé de distribution d'une mise à jour logicielle (2) à une pluralité de véhicules à moteur (4, 5, 7, 8, 9) dans lequel
- la mise à jour logicielle (2) est mise à disposition sur un serveur de données (1) connecté à un réseau comprenant un magasin de données contenant plusieurs parties (3) dans lesquelles la mise à jour logicielle a été divisée,
- le serveur de données fournit les parties (3) par voie hertzienne à au moins un véhicule à moteur de première génération (4, 5) de la pluralité de véhicules à moteur (4, 5, 7, 8, 9),
- pour chaque partie (3) entièrement reçue par un véhicule à moteur de la pluralité de véhicules à moteur (4, 5, 7, 8, 9), le véhicule à moteur (4, 5, 7, 8, 9) respectif transmet un accusé de réception à un serveur de coordination (6),
- après réception de chaque accusé de réception, le serveur de coordination (6) transmet alors une notification de disponibilité correspondante à au moins un véhicule à moteur de seconde génération (7, 8, 9) de la pluralité de véhicules à moteur (4, 5, 7, 8, 9) qui n'a pas encore reçu la partie (3) respective, l'informant que la partie (3) respective est disponible auprès du véhicule à moteur (4, 5) respectif qui a envoyé précédemment l'accusé de réception, dans lequel la notification de disponibilité comporte une adresse réseau de ce véhicule à moteur (4, 5) spécifique auprès duquel la partie (3) respective est disponible,
- à la réception de la notification de disponibilité, le véhicule à moteur de seconde génération (7, 8, 9) télécharge alors la partie (3) respective à partir du véhicule à moteur (4, 5) spécifié dans la notification, et transmet également un accusé de réception correspondant au serveur de coordination (6) lorsqu'il a entièrement téléchargé la partie (3) respective,
- les étapes consistant, pour le serveur de coordination (6) à envoyer une notification de disponibilité concernant la disponibilité d'une partie (3) spécifique à une adresse spécifique d'un véhicule à moteur de n-ième génération (4, 5) à un véhicule à moteur de n+1 ième génération (7, 8, 9), le véhicule à moteur de n+1ième génération (7, 8, 9) téléchargeant la partie (3) respective à partir du véhicule à moteur de n-ième génération (4, 5) spécifié et transmettant un accusé de réception correspondant au serveur de coordination (6), sont répétées de manière itérative avec des désignations de génération croissantes jusqu'à ce que l'ensemble de la pluralité de véhicules à moteur (4, 5, 7, 8, 9) ait reçu et accusé réception de toutes les parties (3) de la mise à jour logicielle (2),
- le serveur de coordination (6) transmet un signal de suppression à l'ensemble de la pluralité de véhicules à moteur (4, 5, 7, 8, 9) lorsque chacun d'eux a reçu toutes les différentes parties (3), dans lequel le signal de suppression comporte une instruction de suppression des parties (3) reçues après que la mise à jour logicielle a été appliquée, et
- les parties (3) sont livrées par le serveur de données (1) aux différents véhicules à moteur de première génération (4, 5) dans des ordres différents, de sorte que pour chaque partie (3), il y a au moins un véhicule à moteur de première génération (4, 5) qui reçoit cette partie (3) particulière en tant que première de toutes les parties (3) différentes.

2. Procédé selon la revendication 1,
**caractérisé en ce que**
le serveur de coordination sélectionne et spécifie l'adresse réseau sur la base de la proximité physique des véhicules à moteur (4, 5, 7, 8, 9) concernés et, pour télécharger la partie (3) respective de la mise à jour logicielle (2) à partir du véhicule à moteur (4, 5, 7, 8, 9) spécifié, le véhicule à moteur (7, 8, 9) téléchargeur respectif établit une connexion de véhicule à véhicule avec le véhicule à moteur (4, 5) auprès duquel la partie (3) respective est disponible.

3. Procédé selon l'une quelconque des revendications précédentes,
**caractérisé en ce que**
concernant la livraison initiale des parties (3) à partir du serveur de données (1), les parties (3) sont livrées à un nombre de véhicules à moteur de première génération (4, 5) supérieur ou égal au nombre de parties différentes (3) en lesquelles la mise à jour logicielle (2) a été divisée.

4. Procédé selon l'une quelconque des revendications précédentes,
**caractérisé en ce que**
à chaque partie (3) sont associées des métadonnées sur la mise à jour logicielle (2) complète, les métadonnées spécifiant au moins le nombre de parties (3) différentes en lesquelles la mise à jour logicielle (2) a été divisée.

5. Procédé selon l'une quelconque des revendications précédentes,
**caractérisé en ce que**
la mise à jour logicielle (2) est appliquée automatiquement par chaque véhicule à moteur (4, 5, 7, 8, 9) à lui-même lorsqu'il a reçu toutes les différentes parties (3).

6. Procédé selon l'une quelconque des revendications précédentes,
**caractérisé en ce que**
chaque véhicule à moteur (4, 5, 7, 8, 9) transmet automatiquement un signal d'achèvement au serveur de coordination (6) lorsque le véhicule à moteur (4, 5, 7, 8, 9) respectif a reçu toutes les différentes parties (3) de la mise à jour logicielle (2).

7. Procédé selon l'une quelconque des revendications précédentes,
**caractérisé en ce que**
une qualité respective d'une connexion réseau de plusieurs des véhicules à moteur (4, 5, 7, 8, 9) est déterminée automatiquement et, parmi ces plusieurs véhicules à moteur (4, 5, 7, 8, 9), ceux auxquels les notifications de disponibilité sont envoyées sont sélectionnés automatiquement sur la base de la qualité déterminée.

8. Procédé selon l'une quelconque des revendications précédentes,
**caractérisé en ce que**
- une qualité d'une connexion réseau respective pour chaque transfert de l'une des parties (3) est surveillée et communiquée au serveur de coordination (6), et
- si un critère de qualité prédéterminé est satisfait, le véhicule à moteur (4, 5, 7, 8, 9) respectif transmettant la partie (3) respective est classé comme source de données privilégiée, et
- les véhicules à moteur (4, 5, 7, 8, 9) classés comme source de données privilégiée sont indiqués de façon préférentielle dans les notifications de disponibilité par le serveur de coordination (6) en fonction de leur disponibilité.

9. Procédé selon l'une quelconque des revendications précédentes,
**caractérisé en ce que**
une fois que toutes les parties (3) ont été livrées par le serveur de données (1) à chaque ensemble de véhicules à moteur de première génération (4, 5), il est choisi automatiquement parmi la pluralité de véhicules à moteur (4, 5, 7, 8, 9) un nouvel ensemble de véhicules à moteur de première génération (4, 5) auxquels les parties (3) sont alors également livrées par le serveur de données (1).

10. Système permettant d'initier et de coordonner la distribution d'une mise à jour logicielle (2) à une pluralité de véhicules à moteur (4, 5, 7, 8, 9), comprenant un serveur de données (1) connecté à un réseau et un serveur de coordination (6) connecté au réseau, dans lequel la mise à jour logicielle (2) comprend plusieurs parties (3) et
- le serveur de données (1) comprend un magasin de données contenant les parties (3) de la mise à jour logicielle (2),
- le serveur de données (1) est configuré pour livrer par voie hertzienne les parties (3) de la mise à jour logicielle (2) à au moins un véhicule à moteur de première génération (4, 5),
- le serveur de données (1) est configuré pour livrer les parties (3) aux différents véhicules à moteur de première génération (4, 5) dans des ordres différents, de sorte que pour chaque partie (3) il y ait au moins un véhicule à moteur de première génération (4, 5) qui reçoive cette partie (3) particulière en tant que première partie de toutes les parties (3) différentes.
et dans lequel le serveur de coordination (6) est configuré pour
- à la réception d'un accusé de réception émanant de l'un des véhicules à moteur (4, 5, 7, 8, 9) concernant au moins une des parties (3), transmettre une notification de disponibilité correspondante à un autre véhicule à moteur de la pluralité de véhicules à moteur (4, 5, 7, 8, 9) qui n'a pas encore reçu la partie (3) respective, en spécifiant la partie (3) et une adresse réseau du véhicule à moteur (4, 5, 7, 8, 9) duquel l'accusé de réception a été reçu, et
- transmettre un signal de suppression à l'ensemble de la pluralité de véhicules à moteur (4, 5, 7, 8, 9) lorsque chacun d'eux a reçu toutes les différentes parties (3), dans lequel le signal de suppression comporte une instruction de suppression des parties (3) reçues après que la mise à jour logicielle a été appliquée.

11. Système selon la revendication 10,
**caractérisé en ce que**
le système comprend un serveur de gestion de données qui intègre le serveur de données (1) et le serveur de coordination (6).

12. Support de stockage de données pour un véhicule à moteur (4, 5, 7, 8, 9) et/ou pour un système selon l'une quelconque des revendications 10 et 11, dans lequel le support de stockage de données contient le code informatique qui met en oeuvre, respectivement, un procédé selon l'une quelconque des revendications 1 à 9, au moins dans la mesure où il concerne le véhicule à moteur (4, 5, 7, 8, 9) ou le système respectif.
